# EUROPEAN PATENT APPLICATION

(11) **EP 4 539 400 A1**
(43) Date of publication of application: **16.04.2025**
(21) Application number: 22948241.9
(22) Date of filing: 27.06.2022
(51) Int. Cl.: H04L 12/28

(54) **EDGE COMPUTING DEVICE AND METHOD, AND INTERNET OF THINGS SYSTEM**

(71) Applicant: Siemens Aktiengesellschaft, 80333 München (DE)
(72) Inventor: ZHOU, Ping, Beijing 100192 (CN); WANG, Huijin, Beijing 102600 (CN)
(74) Representative: Isarpatent
(86) International application number: PCT/CN2022/101658
(87) International publication number: WO 2024/000117

(57) **Abstract**

Provided in the present disclosure are an edge computing device and method, and an Internet of Things system. The edge computing device comprises a processing unit and a programmable logic unit; the programmable logic unit comprises a first memory, a second memory, an instruction distribution module and a data acquisition module; the processing unit receives an instruction from a cloud, writes the instruction into the first memory, reads data generated by field equipment from the second memory, and sends the data to the cloud; the instruction distribution module reads an instruction from the first memory and sends the instruction to the field equipment; the data acquisition module collects data generated by the field equipment and stores the data in the second memory; the programmable logic unit generates a first time base signal and a second time base signal, the instruction distribution module designs a first state machine, and the data acquisition module designs a second state machine; the processing unit, the first memory and the instruction distribution module achieve instruction distribution on the basis of the first time base signal and the first state machine; the processing unit, the second memory and the data acquisition module achieve data transmission on the basis of the second time base signal and the second state machine.

## Description

### Technical Field

The present application relates to the field of Internet of Things (IoT) technology, and more specifically to an edge computing device, method, and IoT system.

### Background Technology

As the IoT technology develops, all physical things desire to connect to the Internet. There is increasingly extensive and profound research on the applications of remote control and data analysis of IoT field devices (i.e., physical things). Physical things are typically sensed and processed by microcontroller units (MCUs), wherein MCUs are used to achieve user control, data collection, and data processing of these physical things. To realize interconnection of all things, multiple sensing and processing units based on MCUs need to be connected so as to form an organic grid system. However, when thousands of MCU-based IoT field devices are interconnected and combined to form a system, it is difficult for users to obtain the states of IoT field devices and interact with specific IoT field device units through thousands of MCU chips. With such a direct connection method for connecting users and multiple field devices, users are faced with massive amounts of raw data, and the processes of data collection, processing, and interaction pose great challenges for communication and computational resources.

### Summary of the Invention

Below is a brief overview of the present invention to enable a basic understanding of some aspects of the present invention. It should be noted that this overview is not exhaustive. It is not intended to define the key or critical parts of the present invention or to limit the scope of the present invention. It is intended only to present certain concepts in a simplified manner, serving as a prelude to the more detailed description that follows.

In view of the above, the present disclosure provides an edge computing device that facilitates interaction between a user and multiple field devices.

According to a first aspect of an embodiment of the present application, an edge computing device is provided, which includes a processing unit and a programmable logic unit, wherein the programmable logic unit comprises a first memory, a second memory, an instruction distribution module, and a data acquisition module, wherein the processing unit receives instructions from the cloud and writes these instructions into the first memory, and reads data from the second memory sent from field devices, then sends the data to the cloud; the instruction distribution module reads the instructions from the first memory and sends them to corresponding field devices. The data acquisition module collects data from the field devices and stores them in the second memory;
the programmable logic unit generates periodic first time base signals and second time base signals, respectively, and the instruction distribution module is designed to have a first state machine, and the data acquisition module is designed to have a second state machine such that in the downlink direction, the processing unit, the first memory, and the instruction distribution module perform downlink instruction distribution based on the first time base signals and the first state machine; in the uplink direction, the processing unit, the second memory, and the data acquisition module perform uplink data transmission based on the second time base signals and the second state machine.

With this approach, multiple field devices can be connected to cloud services, and status information from all field devices can be collected. In addition, user instructions from the cloud or any other cloud-connected devices can be sent to specific field devices, enabling a user to interact with multiple field devices. By using two memories and one state machine each provided in the instruction distribution module and the data acquisition module, simultaneous uplink and downlink data transmission is realized.

Optionally, in one example according to the above aspect, starting from each falling edge of the first time base signals, the processing unit begins writing instructions from the cloud into the first memory, and the write operation ends at a specific moment during the low level of the current cycle of the first time base signal, during which the first state machine of the instruction distribution module is in an idle state; at the next rising edge of the first time base signals, the instruction distribution module starts reading instructions from the first memory and buffering them in a first buffer, and the first state machine is in the reading state; next, the instruction distribution module sequentially distributes the buffered instructions from the first buffer to the corresponding field devices, and the first state machine is in the distributing state; after all the instructions have been distributed, the state machine enters the idle state and waits for the next cycle to enter the reading state. Optionally, in another example according to the above aspect, at each rising edge of the second time base signals, the processing unit begins reading data of the previous cycle from the second memory, the read operation ends at a specific moment during the high level of the current cycle, and the processing unit sends the data to the cloud; during this high-level period, the data acquisition module collects data from all field devices and stores them in a second buffer, and the second state machine is in the data collection state; starting from the falling edge during the high-level period of the second time base signals, the data acquisition module writes the buffered data from the second buffer into the second memory; the second state machine is in the data writing state; after the writing operation ends, the second state machine enters the idle state and waits for the next cycle to enter the data collection state.

With this approach, the design of the state machines enables the processing unit and programmable logic unit to access the memory under the control of the time base signals. The time base signals are configurable by the user, allowing the state data of the edge device and user instructions from the cloud to be transmitted at a configured updating rate.

Optionally, in one example according to the above aspect, the first time base signal and the second time base signal are periodic square wave signals, and their periods may be equal or unequal.

Optionally, in another example according to the above aspect, the periods of the first time base signal and the second time base signal are determined based on the update frequency and data volume requirements of the instructions and data, respectively.

With this approach, the time base signals are user-configurable, enabling edge device state data and user instructions from the cloud to be sent at configured update rates.

Optionally, in one example according to the above aspect, the processing unit communicates with the cloud through an IoT master control unit.

Optionally, in another example according to the above aspects, the IoT master control unit communicates with the cloud using the MQTT protocol.

With this approach, a user can access, analyze, and control a large number of field devices via the cloud.

Optionally, in one example according to the above aspect, the first memory and the second memory are dual-port block memories.

According to a second aspect of embodiments of the present application, an edge computing method is provided, comprising: in the downlink direction, receiving instructions from the cloud, writing the instructions into the first memory, reading the instructions from the first memory, and sending the instructions to the corresponding field devices; in the uplink direction, collecting data from the field devices, storing the data in the second memory, reading the data from the second memory, and sending the data to the cloud, wherein
in the downlink direction, the instruction distribution is implemented based on the first time base signal and the first state machine; in the uplink direction, the data transmission is implemented based on the second time base signal and the second state machine.

According to a third aspect of embodiments of the present application, an IoT system is provided, comprising: a cloud, field devices, and the edge computing device described above, wherein
the cloud and the field devices communicate through the edge computing device.

From the above technical solutions, it can be seen that the edge computing device of the present disclosure can preprocess the data collected from the field devices. The edge computing device includes both a serial computing structure, i.e., a processing unit, and a parallel computing structure, i.e., a programmable logic unit. The processing unit is dedicated to serial computations, e.g., multiplication and accumulation; the programmable logic unit is dedicated to parallel computations, e.g., multi-stage pipeline calculations. In this way, computational resources can be reasonably allocated and utilized based on different requirements for real-time performance and latency, enabling optimal processing of the collected data.

### Drawings of the Description

Figure 1 is a schematic diagram of the IoT system according to an embodiment of the present disclosure;
Figure 2 is a block diagram of an exemplary configuration of the edge computing device according to an embodiment of the present disclosure;
Figure 3 shows a timing diagram of the instruction distribution mechanism in the instruction distribution module of the edge computing device according to an embodiment of the present disclosure;
Figure 4 shows a timing diagram of the data collection mechanism in the data acquisition module of the edge computing device according to an embodiment of the present disclosure;
Figure 5 is a schematic diagram of the memory allocation of the first memory according to one embodiment of the present disclosure;
Figure 6 is a schematic diagram of the memory allocation of the first memory according to another embodiment of the present disclosure;
Figure 7 is a schematic diagram of the memory allocation of the second memory according to one embodiment of the present disclosure;
Figure 8 is a schematic diagram of the memory allocation of the second memory according to another embodiment of the present disclosure;
Figure 9 is a flowchart of an exemplary process of the edge computing method 900 according to an embodiment of the present disclosure.

**List of Symbols in the Figures:**

| | | | | | |
|---|---|---|---|---|---|
| 100: | Internet of Things (IoT) System | 102: | Cloud | 200: | Edge Computing Device |
| 104: | Field Device | 106: | IoT Control Unit | 108: | Communication Interface |
| PS: | Processing Unit | PL: | Programmable Logic Unit | BRAM1: | First Memory |
| BRAM2: | Second Memory | CD: | Instruction ModuleDistribution | DC: | Data Collection Module |
| TB1: | First Time Base Signal | TB2: | Second Time Base Signal | SM1: | First State Machine |
| SM2: | Second State Machine | Idle: | Idle State | RE: | Rising Edge |
| Read: | Read State | Push: | Push State | FE: | Falling Edge |
| Written: | Write State | Offset: | Offset | Offset0-Offset9: | Offset Address |
| Content: | Instruction Content | C0, C1...: | Converter 0, Converter 1 | C01, C02...: | Instructions |
| ID 0-ID9: | Identifier | U0, U1...: | Field Device | U01, U02,...U15...: | Instructions |
| Collect: | Collection State | 900: | Edge Computing Method | S902, S904: | Steps |

### Specific Embodiments

To help those skilled in the art better understand the technical solutions in the embodiments of the present application, the technical solutions in the embodiments of the present application will be clearly and comprehensively described below in conjunction with the accompanying drawings of the embodiments of the present application. Obviously, the described embodiments are only some embodiments of the present application, not all of them. Based on the embodiments in the present application, all other embodiments obtained by those of ordinary skill in the art shall fall within the scope of protection of the embodiments of the present application.

An MCU chip is generally used to control and process data from sensors, thereby producing an MCU-based IoT field device unit, such as a smart sensor unit (Daniel Sygnat, Johannes Baumer, Cost Improved Intelligent Sensor, US20210123176), a fault detection unit (Fang Z, Huang Z, Zhu Y, Detector Temperature Control and Fault Detection System, CN112965550-A), a vehicle speed detection unit (Sumit Jaiswal, Rajiv Chithambaran, Intelligent Transportation System, Host Processor Vehicle and Method, US20180069724 A1), and a power conversion unit (Hayashi Y, Power Conversion Device, US 11063526 B2).

To establish an IoT system that is widely studied nowadays, multiple MCU-based IoT field device units are combined or cascaded to form a huge network. For example, smart sensor units are combined to form a smart home system; fault detection units are combined to form a maintenance system; speed detection units are combined to form an intelligent transportation system; and power conversion units are combined and cascaded to form a smart grid system. When thousands of MCU-based units are combined and cascaded, the original state data grows increasingly large. Cloud computing becomes a reasonable method for processing massive amounts of data. Although each unit has an MCU as its own controller, treating all MCUs as edge computing nodes is not meaningful.

To build an IoT system that processes multiple MCU-based sensing and processing units, the present disclosure proposes an edge computing device that can interact with multiple IoT field device units. On one hand, state data from multiple units can be collected, preprocessed, and sent to the cloud for processing; on the other hand, users can send instructions to specific units via the cloud. In the following description, an MCU-based IoT field device unit will be referred to as a field device, which uses an MCU as a controller to collect field data. The field devices can be various sensors, power converters, etc.

The edge computing device and IoT system according to the embodiments of the present disclosure will be described below in conjunction with the accompanying drawings.

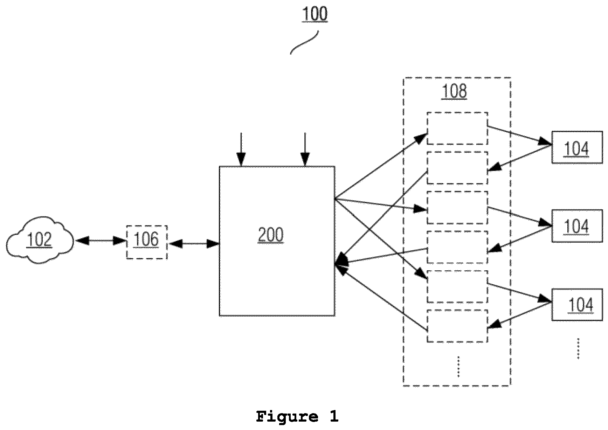

Figure 1 is a schematic diagram of the IoT system according to an embodiment of the present disclosure.

As shown in Figure 1, the IoT system 100 includes a cloud 102, an edge computing device 200, and multiple field devices 104, and communication between the cloud 102 and the edge computing device 200 can be achieved through an IoT control unit 106, while communication between the edge computing device 200 and the field devices 104 is conducted via a communication interface 108.

Specifically, the IoT control unit 106 can receive user instructions from the cloud 102 using the MQTT (Message Queuing Telemetry Transport) protocol and send instructions to the edge computing device 200 via the SPI (Serial Peripheral Interface) protocol or any other inter-chip communication protocol.

User instructions may come from the cloud or other user terminal devices connected to the cloud, such as smartphones, tablets, etc.

The communication interface 108 between the edge computing device 200 and the field devices 104 can use various communication methods such as fiber optic communication, Bluetooth communication, or wireless communication for encoding and decoding.

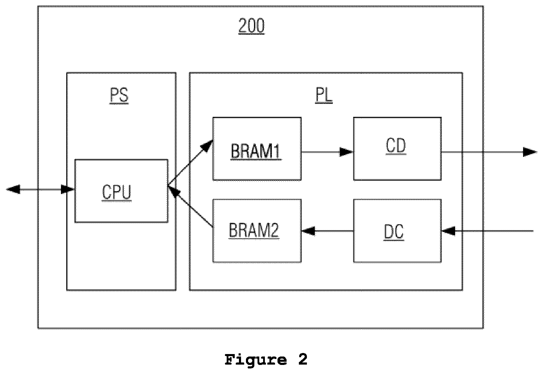

The edge computing device 200 can be seen as a bridge between the cloud 102 and multiple field devices 104. The core tasks of the edge computing device include instruction transmission, data collection, and data preprocessing. The structure and operation of the edge computing device 200 will be explained in detail below by referring to Figure **2****.**

Figure 2 is a block diagram of an exemplary configuration of the edge computing device 200 according to an embodiment of the present disclosure.

As shown in Figure 2, the edge computing device 200 includes a processing unit PS and a programmable logic unit PL.

The main component of the processing unit PS is a CPU, and the processing unit primarily performs serial computation.

The programmable logic unit PL is implemented using programmable logic devices, such as FPGA, CPLD, HDPLD, etc. Those skilled in the art can select an appropriate type of device as needed, and the technical solutions disclosed herein do not restrict the specific type of programmable logic device. The programmable logic unit is mainly used for parallel computation.

The programmable logic unit PL includes a first memory BRAM1, a second memory BRAM2, an instruction distribution module CD, and a data collection module DC.

The processing unit PS is used to receive instructions from the cloud 102 and write these instructions into the first memory BRAM1. The instruction distribution module CD reads instructions from the first memory BRAM1 and sends the instructions to the corresponding field devices 104.

On the other hand, the data collection module DC collects data from the field devices 104 and stores the data in the second memory BRAM2; the processing unit PS reads the data from the field devices 104 from the second memory BRAM2 and sends said data to the cloud 102.

Specifically, the CPU in the processing unit PS reads data from the second memory BRAM2 at a fixed frequency so that the processing unit can send the data to the IoT control unit via the SPI communication protocol or any other inter-chip communication protocol at a specific frequency, and then the IoT control unit can send the data from all field devices to the cloud via the MQTT protocol.

The programmable logic unit PL generates periodic first time base signals TB1 and second time base signals TB2. A first state machine SM1 is provided in the instruction distribution module CD, and a second state machine SM2 is provided in the data collection module DC, so that, in the downlink direction, the processing unit PS, the first memory BRAM1, and the instruction distribution module CD implement downlink instruction distribution based on the first time base signal TB1 and the first state machine SM1, and, in the uplink direction, the processing unit PS, the second memory BRAM2, and the data collection module DC implement uplink data transmission based on the second time base signal TB2 and the second state machine SM2.

The first memory and the second memory can be a dual-port block memory or any other memory capable of reading and writing.

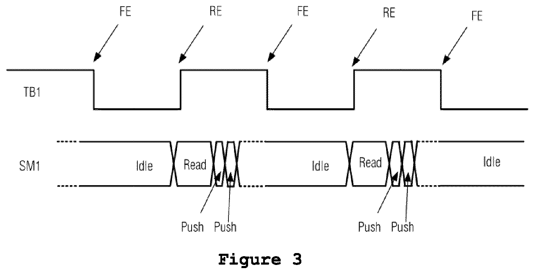

Figure 3 shows a timing diagram of the instruction distribution mechanism in the instruction distribution module CD of the edge computing device according to an embodiment of the present disclosure.

As described above, the processing unit PS, the first memory BRAM1, and the instruction distribution module CD implement downlink instruction distribution based on the first time base signal TB1 and the first state machine SM1.

Specifically, starting from each falling edge FE of the first time base signal TB1, the processing unit PS begins writing instructions from the cloud 102 into the first memory BRAM1, the write operation ends at a moment during the low level of the current cycle of the first time base signal TB1, and, during this process, the first state machine SM1 of the instruction distribution module CD is in the idle state Idle; at the next rising edge RE of the first time base signal TB1, the instruction distribution module CD begins reading instructions from the first memory BRAM1 and buffering the instructions in a first buffer (not shown in the figure), and the first state machine SM1 enters the read state Read; next, the instruction distribution module CD sequentially distributes the buffered instructions from the first buffer to the corresponding field devices, and the first state machine SM1 enters the push state Push; after all instructions are distributed, the first state machine SM1 goes into the idle state Idle and waits to enter the read state for the next cycle.

During this process, at the cycle of the first time base signal TB1, the instruction distribution module CD repeatedly executes the operation of distributing instructions from the cloud to each field device. Users can set an appropriate cycle for the first time base signal TB1 to adjust the frequency of instruction distribution as needed.

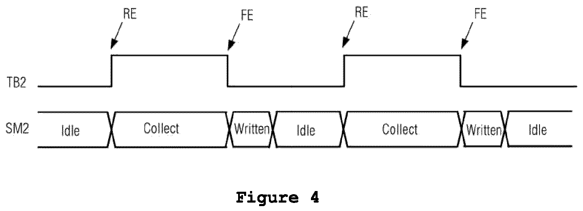

Figure 4 shows a timing diagram of the data collection mechanism in the data collection module DC.

As described above, the processing unit PS, the second memory BRAM2, and the data collection module DC implement uplink data transmission based on the second time base signal TB2 and the second state machine SM2.

Specifically, at each rising edge RE of the second time base signal TB2, the processing unit PS begins reading the data of the previous cycle from the second memory BRAM2, the read operation ends at a moment during the high level of the current cycle, and the processing unit PS sends the data to the cloud; during the high-level period, the data collection module DC collects data from all field devices and buffers the data in a second buffer (not shown in the figure), and the second state machine SM2 is in the data collection state Collect; starting from the falling edge FE of the high-level period of the second time base signal TB2, the data collection module DC writes the buffered data from the second buffer into the second memory BRAM2, and the second state machine SM2 is in the data write state Written; after the write operation ends, the second state machine goes into the idle state Idle and waits to enter the data collection state for the next cycle.

During this process, at the cycle of the second time base signal TB2, the data collection module DC repeatedly executes the operation of collecting data from each field device. A user can adjust the cycle of the second time base signal TB2 according to the data volume of the field devices to set the data updating frequency. The cycle of the second time base signal TB2 may be equal to or different from the cycle of the first time base signal TB1.

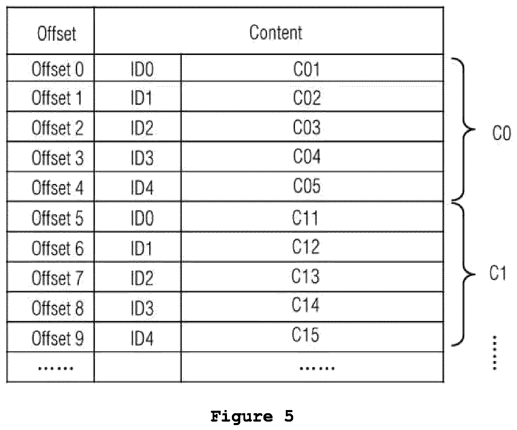

Figure 5 explains how instructions from the cloud are distributed and stored in the first memory by using power converters as examples of field devices.

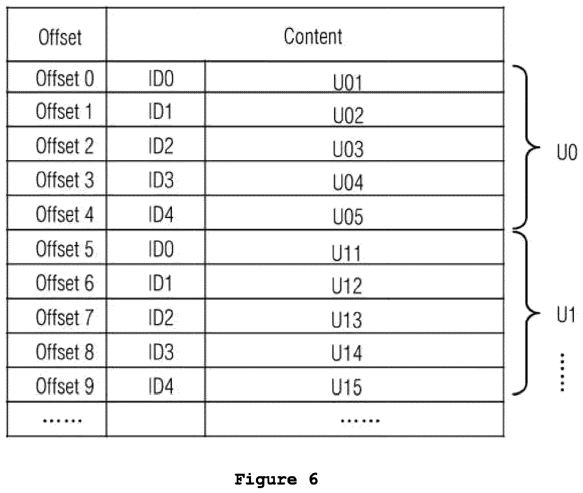

For example, the field devices are multiple power converters, each having two stages; the first stage uses an NPC (Neutral Point Clamped) structure to implement the AC-DC function, and the second stage uses a CLLC (two inductors and two capacitors) structure to implement the DC-DC function. The instruction content (Content) for converter 0C0 is stored at the address with offsets 0-4, i.e., Offset0-Offset4, the instruction content for converter 1C1 is stored at the address with offsets 5-9, i.e., Offset5-Offset9, and the instruction content for converter 2 can be stored at the address with offsets 10-14 Offset10-Offset14 (not shown in the figure), and so on. For converter C0, the first instruction C01 of converter C0 represents an NPC instruction, including an NPC control mode, reset signals, enable signals, precharge instructions, voltage settings, and other information. The second instruction C02 is a CLLC instruction, including a CLLC control module, power flow direction, enable signals, voltage settings, current settings, and other information. The next three addresses are reserved for future use. As an example, there are instructions for structures other than NPC and CLLC structures. For each instruction, there is a corresponding identifier ID0-ID4 to indicate the type of instruction data. Instructions for other converters follow the same pattern. Figure 6 illustrates the memory allocation mechanism in the first memory for general field devices. Figure 6 is similar to Figure 5. Offset0-Offset9... represent offset addresses, and U0, U1... represent field devices. The instructions for all field devices U01, U02, ... U15... are arranged sequentially in memory addresses, one after another. Each field device has a fixed address span. For example, the address span in Figure 6 is 5, but it can be configured to any other length based on the number of user instructions. Within each address span, the first, second, and third instructions for a field device are arranged sequentially in that address span.

Those skilled in the art can understand that the memory allocation method shown in Figure 6 can be used to store instructions for any type of field device, and this will not be described in further detail here.

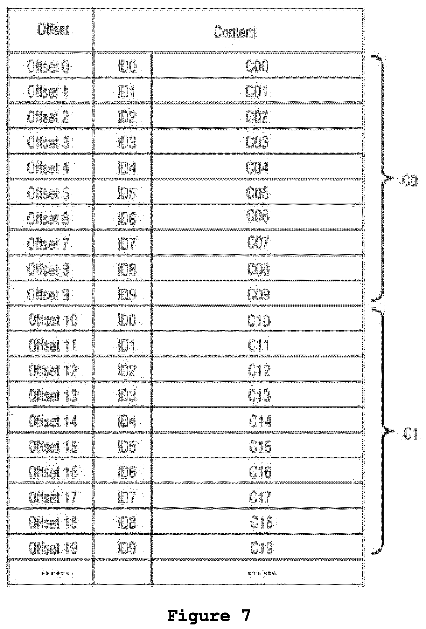

Figure 7 uses power converters as an example to illustrate how the data collected from power converters are allocated and stored in the second memory. Similarly, this example considers the power converters to have an NPC and CLLC two-stage structure for AC-DC and DC-DC conversion. The state data of converter 0C0 are stored at addresses with offsets 0-9, **i.e.,** Offset0-Offset9. The state data of converter 1C1 are stored at addresses with offsets 10-19, **i.e.,** Offset0-Offset9. The state data of converter 2 are stored at addresses with offsets 20-29 (not shown in the figure), and so on. For each converter, NPC state data include DC voltage value, active current value, reactive current value, error codes, output vector, etc., and are stored at addresses identified as ID0, ID1, ID2, and ID3. CLLC state data include DC voltage value, high-side current, low-side current, error status, etc., and are stored at addresses identified as ID4, ID5, ID6, and ID7. Addresses identified as ID8 and ID9 are reserved for future use for structures other than NPC and CLLC structures.

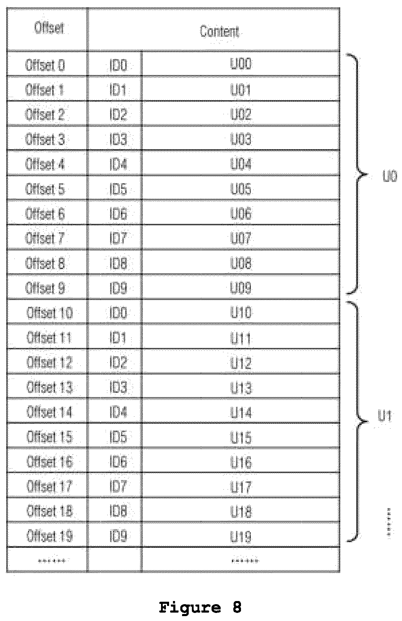

Those skilled in the art can understand that the field devices can be of any type. Figure 8 illustrates the memory allocation mechanism in the second memory for general field devices.

Figure 8 is similar to Figure 7. Offset0-Offset19... represent offset addresses, and U0, U1... represent field devices. The data collected from all field devices U01, U02, ... U19... are arranged sequentially in memory addresses, one after another. Each field device has a fixed address span. For example, the address span in Figure 8 is 10, but a user can configure the address span to any other length based on the data volume collected from the field devices. For each field device, multiple sensed parameters can be included. For each parameter, there may be multiple state values, and all these state data are arranged sequentially within an address span.

Those skilled in the art can understand that the memory allocation method shown in Figure 8 can be used to store data collected from any type of field device, and this will not be described in further detail here.

During the description of the edge computing device in the above embodiments, it is apparent that certain processes or methods have also been disclosed. In the following, an overview of these methods is provided without repeating certain details that have already been discussed above. However, it should be noted that, while these methods are disclosed during the description of the edge computing device, these methods do not necessarily use the above-mentioned components or are not necessarily executed by these components. For example, the implementation of the edge computing device may be partially or entirely realized using hardware and/or firmware. The edge computing methods discussed below can also be fully implemented using computer-executable programs, although these methods can also use the hardware and/or firmware of a data relay device.

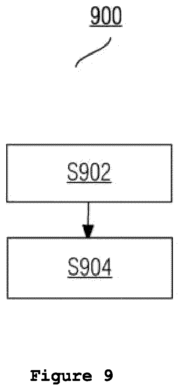

Figure 9 is a flowchart illustrating an exemplary process of the edge computing method 900 according to an embodiment of the present disclosure.

First, in block S902, in the downlink direction, instructions from the cloud 102 are received and written into the first memory BRAM1. The instructions are then read from the first memory BRAM1 and sent to the corresponding field devices 104. Next, in block S904, in the uplink direction, data are collected from the field devices 104 and are stored in the second memory BRAM2. The data are then read from the second memory (BRAM2) and sent to the cloud 102.

In the downlink direction, instruction distribution is implemented based on the first time base signal TB1 and the first state machine SM1. In the uplink direction, data transmission is implemented based on the second time base signal TB2 and the second state machine SM2.

Here, the first time base signal and the second time base signal, as well as the first state machine and the second state machine, can be respectively generated by a programmable logic controller for the downlink and uplink.

Specifically, implementing downlink instruction distribution based on the first time base signal TB1 and the first state machine SM1 includes the following: Starting from each falling edge of the first time base signal TB1, the instructions from the cloud 102 are written into the first memory BRAM1, and the write operation ends at a moment during the low level of the current cycle of the first time base signal TB1. During this process, the first state machine SM1 is in the idle state Idle. At the next rising edge of the first time base signal TB1, the instructions are read from the first memory BRAM1 and buffered in the first buffer. The first state machine SM1 is in the read state Read. Next, the instructions buffered in the first buffer are sequentially distributed to the corresponding field devices 104. The first state machine (SM1) goes into the push state Push. After all the instructions are distributed, the first state machine goes into the idle state Idle and waits to enter the read state (Read) for the next cycle.

Specifically, in the uplink direction, uplink data transmission based on the second time base signal TB2 and the second state machine SM2 includes the following:
At each rising edge of the second time base signal TB2, data of the previous cycle are read from the second memory BRAM2.
The read operation ends at a moment during the high level of the current cycle, and the data are sent to the cloud 102.
During the high-level period, data are collected from all the field devices 104 and stored in the second buffer. The second state machine SM2 is in the data collection state Collect.
Starting at the falling edge of the high-level period of the second time base signal TB2, the buffered data in the second buffer are written into the second memory BRAM2. The second state machine SM2 is in the data write state Written. After the write operation ends, the second state machine SM2 goes into the idle state Idle and waits to enter the data collection state Collect for the next cycle.

The specific operational process of the data relay method in the present disclosure can be the same as or similar to the related parts of the embodiments of the edge computing device 200 described by referring to Figures 1-8, which will not be elaborated here.

The edge computing device, method, and IoT system disclosed herein offer one or more of the following advantages:
The edge computing device according to the present disclosure employs two dual-port block memories and is designed to have one state machine each in the instruction distribution module and the data collection module, respectively, to enable simultaneous transmission of uplink and downlink data.

Two memories are used as the data exchange medium between the processing unit and the programmable logic unit. The processing unit is connected to the cloud through the IoT control unit. In this way, users can access, analyze, and control a large number of field devices through the cloud.

The edge computing device according to the present disclosure allows multiple field devices to connect to cloud services and collect state information from all field devices. In addition, user instructions from the cloud or any other cloud-connected devices can be sent to specific field devices to realize interaction between users and multiple field devices.

The design of the state machine allows the processing unit and the programmable logic unit to alternately access the memory under the control of the time base signal. The time base signal can be configured by the user so that the state data from the edge device and the user instructions from the cloud can be transmitted at configured update rates.

The edge computing device according to the present disclosure can preprocess the data collected from field devices. The edge computing device includes both a serial computing structure, i.e., the processing unit, and a parallel computing structure, i.e., the programmable logic unit. The processing unit is dedicated to serial computations, such as multiplication and accumulation; the programmable logic unit is dedicated to parallel computations, such as pipeline computations. This allows for the rational allocation and utilization of computing resources to achieve optimal computation based on different needs.

It should be noted that not all modules in the structural diagrams of the above devices are necessary, and certain modules can be omitted based on actual needs. The execution order of the operations is not fixed and can be adjusted as needed. The system structures described in the above embodiments can be physical structures or logical structures. That is, some modules may be implemented by the same physical entity, or some modules may be implemented by multiple physical entities, or they may be jointly implemented by certain components in multiple independent devices.

In the above embodiments, hardware modules can be implemented mechanically or electrically. For example, a hardware module may include permanently dedicated circuits or logic (such as dedicated processors, FPGAs, or ASICs) to perform corresponding operations. Hardware modules may also include programmable logic or circuits (such as general-purpose processors or other programmable processors) that can be temporarily configured by software to perform corresponding operations. The specific implementation method (mechanical means, permanently dedicated circuits, or temporarily configured circuits) can be determined based on considerations of costs and time.

The application has been presented and described in detail above through the accompanying drawings and preferred embodiments; however, the present application is not limited to these disclosed embodiments. Based on the above embodiments, those skilled in the art will understand that it is possible to combine the code review methods of the different embodiments described to obtain more embodiments of the present application, which shall also fall within the scope of protection of the present application.

## Claims

1. An edge computing device (200), comprising a processing unit (PS) and a programmable logic unit (PL), wherein the programmable logic unit (PL) comprises a first memory (BRAM1), a second memory (BRAM2), an instruction distribution module (CD), and a data collection module (DC),
the processing unit (PS) receives instructions from the cloud (102) and writes the instructions into the first memory (BRAM1), and reads data from the field devices (104) from the second memory (BRAM2) and sends the data to the cloud (102); the instruction distribution module (CD) reads the instructions from the first memory (BRAM1) and sends them to the corresponding field devices (104), and the data collection module (DC) collects data from the field devices (104) and stores the data in the second memory (BRAM2);
the programmable logic unit (PL) generates periodic first time base signals (TB1) and second time base signals (TB2), a first state machine (SM1) is provided in the instruction distribution module (CD), and a second state machine (SM2) is provided in the data collection module (DC) so that in the downlink direction, the processing unit (PS), the first memory (BRAM1), and the instruction distribution module (CD) implement downlink instruction distribution based on the first time base signal (TB1) and the first state machine (SM1), and in the uplink direction, the processing unit (PS), the second memory (BRAM2), and the data collection module (DC) implement uplink data transmission based on the second time base signal (TB2) and the second state machine (SM2).

2. The edge computing device (200) as claimed in claim 1, wherein:
starting from each falling edge of the first time base signal (TB1), the processing unit (PS) begins writing instructions from the cloud (102) into the first memory (BRAM1), the write operation ends at a moment during a low level of the current cycle of the first time base signal (TB1), and during this process, the first state machine (SM1) of the instruction distribution module (CD) is in the idle state (Idle); at the next rising edge of the first time base signal (TB1), the instruction distribution module (CD) begins reading the instructions from the first memory (BRAM1) and buffering them in a first buffer, and the first state machine (SM1) is in the read state (Read); next, the instruction distribution module (CD) sequentially distributes the buffered instructions from the first buffer to the corresponding field devices (104), the first state machine (SM1) is in the push state (Push); after all the instructions have been distributed, the first state machine goes into the idle state (Idle) and waits to enter the read state (Read) for the next cycle.

3. The edge computing device (200) as claimed in claim 1, wherein:
at each rising edge of the second time base signal (TB2), the processing unit (PS) begins reading data from the second memory (BRAM2) from the previous cycle, the read operation ends at a moment during a high level of the current cycle, and the processing unit (PS) sends the data to the cloud (102);
during the high-level period, the data collection module (DC) collects data from all field devices (104) and stores the data in a second buffer, the second state machine (SM2) is in the data collection state (Collect); starting at the falling edge of the high-level period of the second time base signal (TB2), the data collection module (DC) writes the buffered data from the second buffer into the second memory (BRAM2), the second state machine (SM2) is in the data write state (Written);
after the write operation ends, the second state machine (SM2) goes into the idle state (Idle) and waits to enter the data collection state (Collect) for the next cycle.

4. The edge computing device (200) as claimed in any one of claims 1-3, wherein,
the first time base signal (TB1) and the second time base signal (TB2) are periodic square wave signals, and the cycles of the first time base signal (TB1) and the second time base signal (TB2) may be equal or unequal.

5. The edge computing device (200) as claimed in any one of claims 1-3, wherein,
the cycles of the first time base signal (TB1) and the second time base signal (TB2) are determined as claimed in the updating frequency and data volume requirements of the instructions and the data.

6. The edge computing device (200) as claimed in any one of claims 1-3, wherein,
the processing unit (PS) communicates with the cloud (102) through the IoT control unit (106).

7. The edge computing device (200) as claimed in any one of claims 1-3, wherein,
the IoT control unit (106) communicates with the cloud (102) using the MQTT protocol.

8. The edge computing device (200) as claimed in any one of claims 1-3, wherein,
the first memory (BRAM1) and the second memory (BRAM2) are dual-port block memories.

9. An edge computing method, comprising:
in the downlink direction, receiving instructions from the cloud (102) and writing them into the first memory (BRAM1), reading the instructions from the first memory (BRAM1), and sending them to the corresponding field devices (104);
in the uplink direction, collecting data from the field devices (104), storing the data in the second memory (BRAM2), reading the data from the field devices (104) from the second memory (BRAM2), and sending the data to the cloud (102), wherein
in the downlink direction, instruction distribution is implemented based on the first time base signal (TB1) and the first state machine (SM1); in the uplink direction, uplink data transmission is implemented based on the second time base signal (TB2) and the second state machine (SM2).

10. The edge computing method as claimed in claim 9, wherein the downlink instruction distribution implemented based on the first time base signal (TB1) and the first state machine (SM1) includes:
starting from each falling edge of the first time base signal (TB1), instructions from the cloud (102) are written into the first memory (BRAM1), the write operation ends at a moment during the low level of the current cycle of the first time base signal (TB1), and during this process, the first state machine (SM1) is in the idle state (Idle); at the next rising edge of the first time base signal (TB1), the instructions are read from the first memory (BRAM1) and buffered in a first buffer, and the first state machine (SM1) is in the read state (Read); next, the instructions buffered in the first buffer are sequentially distributed to the corresponding field devices (104), and the first state machine (SM1) is in the push state (Push); after all the instructions are distributed, the first state machine goes into the idle state (Idle) and waits to enter the read state (Read) for the next cycle.

11. The edge computing method as claimed in claim 9, wherein in the uplink direction, data transmission implemented based on the second time base signal (TB2) and the second state machine (SM2) includes the following:
at each rising edge of the second time base signal (TB2), data from the previous cycle is read from the second memory (BRAM2), the read operation ends at a moment during the high level of the current cycle, and the data are sent to the cloud (102); during the high-level period, data are collected from all the field devices (104) and stored in a second buffer, and the second state machine (SM2) is in the data collection state (Collect); starting at the falling edge of the high-level period of the second time base signal (TB2), the buffered data in the second buffer are written into the second memory (BRAM2), the second state machine (SM2) is in the data write state (Written); after the write operation ends, the second state machine (SM2) goes into the idle state (Idle) and waits to enter the data collection state (Collect) for the next cycle.

12. The edge computing method as claimed in any one of claims 9-11, wherein,
the first time base signal (TB1) and the second time base signal (TB2) are periodic square wave signals, and the cycles of the first time base signal (TB1) and the second time base signal (TB2) may be equal or unequal.

13. The edge computing method as claimed in any one of claims 9-11, wherein,
the cycles of the first time base signal (TB1) and the second time base signal (TB2) are determined based on the updating frequency and data volume requirements of the instructions and the data.

14. An Internet of Things (IoT) system (100), comprising: the cloud (102), field devices (104), and the edge computing device (200) described in any one of claims 1-8, wherein,
the cloud (102) and the field devices (104) communicate through the edge computing device (200).
